# EUROPÄISCHE PATENTSCHRIFT

(11) **EP 3 117 031 B1**
(45) Veröffentlichungstag und Bekanntmachung des Hinweises auf die Patenterteilung: **13.11.2019**
(21) Anmeldenummer: 15707932.8
(22) Anmeldetag: 03.03.2015
(51) Int. Cl.: D01D 5/16, D01D 10/02, D01D 13/00, D01D 13/02, D02G 1/12, D01D 5/22

(54) **VERFAHREN UND VORRICHTUNG ZUM SCHMELZSPINNEN, VERSTRECKEN, KRÄUSELN UND AUFWICKELN MEHRERER FÄDEN**
METHOD AND APPARATUS FOR MELTSPINNING, DRAWING, CRIMPING AND WINDING UP A PLURALITY OF YARNS
PROCEDE ET APPAREIL DE FILAGE À CHAUD, D'ÉTIRAGE, DE SERTISSAGE ET D'ENROULEMENT DE PLUSIEURS FILS

(30) Priorität: 08.03.2014 DE 102014003317
(43) Veröffentlichungstag der Anmeldung: 18.01.2017
(73) Patentinhaber: Oerlikon Textile GmbH & Co. KG, 42897 Remscheid (DE)
(72) Erfinder: STÜNDL, Mathias, 22880 Wedel (DE); KALIES, Stefan, 24582 Hoffeld (DE); KAULITZKI, Marco, 24589 Nortorf (DE); WESTPHAL, Jan, 24589 Schülp (DE)
(74) Vertreter: KNH Patentanwälte Neumann Heine Taruttis PartG mbB
(86) Internationale Anmeldenummer: PCT/EP2015/054388
(87) Internationale Veröffentlichungsnummer: WO 2015/135794

(56) Entgegenhaltungen:
- DE-A1- 10 053 073
- DE-A1-102007 024 765
- US-A1- 2006 003 037
- US-A1- 2013 049 253

## Beschreibung

Die Erfindung betrifft ein Verfahren zum Schmelzspinnen, Verstrecken, Kräuseln und Aufwickeln mehrerer Fäden gemäß dem Oberbegriff des Anspruchs 1 sowie eine Vorrichtung zum Schmelzspinnen, Verstrecken, Kräuseln und Aufwickeln mehrerer Fäden gemäß dem Oberbegriff des Anspruchs 7.

Bei der Herstellung von gekräuselten Fäden in einem Schmelzspinnprozess ist es üblich, dass die Fäden nach dem Extrudieren gemeinsam als eine Fadengruppe geführt und behandelt werden. So ist es üblich, dass die Fäden mit Abstand zueinander gemeinsam am Umfang von Galetteneinheiten geführt werden. In Abhängigkeit von dem jeweiligen Behandlungsschritt und dem Behandlungsaggregat werden unterschiedliche Fadenabstände zwischen den Fäden benötigt. So ist beispielsweise beim Extrudieren der Fäden eine Spinnteilung, die den Abstand der Spinndüsen zueinander definiert, einzuhalten. Nach dem Extrudieren zur Führung an den Galetteneinheiten lassen sich die Fäden in einem wesentlich engeren Behandlungsabstand zueinander führen. Die unterschiedlichen Fadenabstände erfordern, dass die Fäden entweder aufgespreizt oder zusammengeführt werden müssen. Da alle Fäden der Fadenschar einer Fadengruppe möglichst unter gleichen Bedingungen hergestellt und behandelt werden müssen, sind die Auslenkungen der einzelnen Fäden begrenzt, um die an den Fäden wirkenden Fadenzugspannungen möglichst gleich zu halten. Dadurch ergeben sich oftmals sehr lange Übergangszonen, um die Fäden von einem kurzen Fadenabstand zu einem großen Fadenabstand zu führen. Derartige Fadenabspreizungen oder Zusammenführungen können zwar durch zusätzliche Fadenführer unterstützt werden, die haben jedoch grundsätzlich den Nachteil, dass jeder Fadenführer eine mechanische Belastung am Faden und somit eine zusätzliche Fadenspannungszugkraft erzeugt. Daher werden derartige unerwünschte Reibpunkte bei der Führung der Fäden möglichst vermieden. Insbesondere bei der Herstellung von gekräuselten Fäden ist daher darauf zu achten, dass keine Unregelmäßigkeiten aufgrund unterschiedlicher Fadenführungen entstehen. Besonders sensibel ist hierbei die Zuführung zu den Texturieraggregaten, in welcher eine Kräuselung der Filamentstränge in den Fäden erzeugt wird.

Aus der EP 1 449 945 A2 ist ein gattungsgemäßes Verfahren und eine gattungsgemäße Vorrichtung bekannt, bei welcher die Fäden einer Fadenschar zwischen einer Galetteneinheit und einer Kräuseleinrichtung aufgespreizt werden, wobei die Texturieraggregate der Kräuseleinrichtung fächerförmig gehalten sind, so dass an dem Einlauf der Texturieraggregate keine Auslenkungen und Abknickungen stattfinden. Die Texturieraggregate werden somit in die Fadenführung zur Aufspreizung der Fadenschar genutzt, wobei die Umlenkung in einen Bereich verlegt wird, in welchem die Fäden zu einem Fadenstopfen aufgestaucht sind.

Bei dem bekannten Verfahren und der bekannten Vorrichtung lassen sich die Fäden zwar direkt ohne Umlenkung und Abknickung in die Texturieraggregate führen, jedoch mit dem Nachteil, dass die Fäden aufgrund der Aufspreizung schräg über die Galette geführt werden. Dabei besteht das Problem, dass insbesondere bei Fäden aus Polymeren, die zum Kleben an Galetten neigen, es zu einzelnen Filamentabrissen kommt oder dass bei mehrfarbigen Fäden die Reibeffekte an der Galette zu Farbungleichmäßigkeiten führen. Desweiteren führt die verlagerte Umlenkung im Bereich des Fadenstopfens zu Ungleichmäßigkeiten in der Stopfendichte, die insbesondere beim Abkühlen zur Fixierung der Kräuselung besonders relevant ist.

Grundsätzlich sind im Stand der Technik jedoch auch andere Verfahren und Vorrichtungen zum Schmelzspinnen, Verstrecken, Kräuseln und Aufwickeln mehrerer Fäden bekannt, bei welcher die Fäden nach dem Extrudieren nicht als Fadengruppe sondern einzeln geführt werden. So ist beispielsweise aus der US 2005/0151295 A1 ein Verfahren und eine Vorrichtung bekannt, bei welcher jeder einzelne Faden nach dem Extrudieren separat abgezogen, verstreckt, gekräuselt und zu einer Spule aufgewickelt wird. Hierbei werden Aufspreizungen oder Zusammenführungen der Fadenschar gänzlich vermieden. Derartige Verfahren und derartige Vorrichtungen erfordern jedoch einen hohen apparativen Aufwand, um eine Vielzahl von Fäden gleichzeitig herstellen zu können.

Die DE 100 53 073 A1 und die US 2006/003037 A1 offenbaren weitere gattungsgemäße Verfahren und gattungsgemäße Vorrichtungen.

Es ist somit Aufgabe der Erfindung, ein gattungsgemäßes Verfahren und eine gattungsgemäße Vorrichtung zum Schmelzspinnen, Verstrecken, Kräuseln und Aufwickeln mehrerer Fäden bereitzustellen, mit welchem bzw. mit welcher eine Gruppe von Fäden als eine Fadenschar mit hoher Gleichmäßigkeit geführt und separat gekräuselt werden können.

Diese Aufgabe wird erfindungsgemäß durch ein Verfahren mit den Merkmalen nach Anspruch 1 und durch eine Vorrichtung mit den Merkmalen nach Anspruch 7 gelöst.

Vorteilhafte Weiterbildungen der Erfindung sind durch die Merkmale und Merkmalskombinationen der jeweiligen Unteransprüche definiert.

Die Erfindung zeichnet sich dadurch aus, dass innerhalb der Fadenschar jeder Faden eine identische Fadenführung und identische Behandlung erhält. Hierzu werden die Fäden an zumindest einer der Galetteneinheit vereinzelt mit mehreren Umschlingungen nebeneinander geführt, so dass sich insgesamt ein größerer Fadenabstand zwischen den Fäden an der Galetteneinheit einstellt. Nach Ablauf der Fäden von der Galetteneinheit werden diese in einem geraden Fadenlauf parallel nebeneinander direkt in die Texturieraggregate geführt, so dass an jedem der Fäden gleiche Bedingungen vorherrschen. Somit können insbesondere die Fadenabstände zwischen dem Ablauf der Galetteneinheit und einem Einlauf der Texturieraggergate besonders kurz ausgeführt werden, was insbesondere die Temperierung der Fäden günstig beeinflusst.

Die erfindungsgemäße Vorrichtung löst die Aufgabe dadurch, dass die benachbarten Texturieraggregate der Kräuseleinrichtung einen derartigen Behandlungsabstand zwischen sich bilden, dass die Fäden bei einer vereinzelten Führung mit mehreren Umschlingungen an der Galetteneinheit parallel in einem geraden Fadenlauf führbar sind. Durch die vereinzelte Fadenführung der Fäden lassen sich somit beliebige Führungsabstände zwischen den Fäden realisieren. Die Umfangsabschnitte der Galetteneinheit zwischen benachbarten Fäden werden jeweils für die Umschlingungen des Fadens genutzt, so dass insbesondere zur Temperierung der Fäden ausreichende Kontaktlängen am Umfang beheizter Galetten realisierbar sind. Als Galetteneinheit wird hierbei ein Rollenpaar verstanden, dass eine Mehrfachumschlingung des Fadens ermöglicht. Das Rollenpaar lässt sich dabei aus zwei angetriebenen beheizten Galetten oder aus einer beheizten Galette und einer Überlaufrolle bilden.

Die in dem Schmelzspinnprozess verwendeten Texturieraggregate zur Herstellung von gekräuselten Fäden nutzen das sogenannte Stauchkammerprinzip, bei welchem der erwärmte multifile Faden zu einem Fadenstopfen gestaucht wird. Insoweit ist die Weiterbildung des erfindungsgemäßen Verfahrens besonders vorteilhaft, bei welchen die Fäden zum Kräuseln jeweils zu einem Fadenstopfen gestaucht werden und bei welchem die Fadenstopfen parallel nebeneinander geführt und zu gekräuselten Fäden aufgelöst werden. Damit ist auch die Behandlung der Fadenstopfen bei der Herstellung einer Fadenschar von gekräuselten Fäden mit hoher Gleichmäßigkeit ausführbar.

Das Auflösen des Fadenstopfens erfolgt dabei ebenfalls vorteilhaft mit parallel geführten Fäden, die parallel nebeneinander durch eine Galetteneinheit abgezogen werden, wobei zur Nachbehandlung die Fäden vereinzelt mit mehreren Umschlingungen nebeneinander an der Galetteneinheit geführt werden.

Zur Verbesserung der gleichmäßigen Behandlung der Fäden ist die Weiterbildung der Erfindung vorgesehen, bei welchem die Fäden nach dem Ausspinnen parallel nebeneinander mit einem Spinnabstand zueinander verstreckt und gekräuselt werden. Somit ist ein Zusammenführen der Fadenschar nach dem Spinnen nicht erforderlich, so dass die Fäden in sehr kurzen Abständen zwischen der Spinneinrichtung und der Verstreckeinrichtung nach dem Spinnen aufgenommen und geführt werden können.

Grundsätzlich besteht jedoch auch die Möglichkeit, den Behandlungsabstand beim Kräuseln der Fäden auf die nachfolgende Aufwicklung der Fäden zu Spulen abzustimmen, so dass die Fäden vor dem Aufwickeln zu mehreren Spulen parallel nebeneinander mit einem durch die Spulen bedingten Wickelabstand zueinander verstreckt und gekräuselt werden.

Für den Fall, dass die Fäden nach dem Spinnen bis zum Aufwickeln zu Spulen mit einem unveränderten Abstand zueinander parallel geführt werden, besteht die Möglichkeit einer besonders kompakten Fadenführung. Diese Verfahrensvariante zeichnet sich jedoch besonders durch die Gleichmäßigkeit der Fadenherstellung dar. So lässt sich jeder der Fäden der Fadenschar unter gleichen Bedingungen mit gleicher Fadenführung ohne zusätzliche Umlenkungen oder Auslenkungen herstellen.

Bei der erfindungsgemäßen Vorrichtung ist die Weiterbildung bevorzugt ausgeführt, bei welcher der Behandlungsabstand zwischen den Texturieraggregaten durch eine Anzahl der Umschlingungen eines der Fäden an der Galetteneinheiten bestimmt ist. So kann die für die Erwärmung des Fadens maßgebliche Kontaktlänge zwischen dem Faden und einer beheizten Oberfläche einer Galette der Galetteneinheit bei der Fadenführung berücksichtigt werden, um den bereits erwärmten Faden mit kurzer Übergangszone direkt in die Texturieraggregate zu überführen. Die Anzahl der Umschlingungen an der Galetteneinheiten definiert dabei die Kontaktlänge zwischen dem Faden und einer beheizten Galettenoberfläche.

Bei der Herstellung von gekräuselten Fäden ist es allgemein üblich, dass nach der Kräuselung noch eine Nachbehandlung stattfindet. Insoweit ist die Weiterbildung der erfindungsgemäßen Vorrichtung bevorzugt ausgeführt, bei welcher der Kräuseleinrichtung eine Nachbehandlungseinrichtung mit mehreren Verwirbelungsaggregaten nachgeordnet ist, wobei benachbarte Verwirbelungsaggregate mit dem Behandlungsabstand zueinander gehalten sind. Damit lässt sich die parallele Fadenführung in der Fadenschar selbst zur Nachbehandlung beibehalten. Eine Zusammenführung der Fadenschar ist nicht erforderlich.

Um möglichst eine kompakte Vorrichtung für die Herstellung der gekräuselten Fadenschar zu erhalten, lässt sich die erfindungsgemäße Vorrichtung in verschiedenen Varianten ausführen. So besteht die Möglichkeit, einen zwischen benachbarten Spinndüsen der Spinneinrichtung vorgesehenen Spinnabstand gleich dem Behandlungsabstand zwischen den Texturieraggregaten zu wählen. Alternativ kann der Behandlungsabstand zwischen den Texturieraggregaten jedoch auch gleich einem Wickelabstand zwischen benachbarten Wickelstellen der Aufwickeleinrichtung ausgebildet sein. Besonders vorteilhaft für eine kompakte Anordnung ist die Alternative, bei welcher der Spinnabstand zwischen benachbarten Spinndüsen und der Wickelabstand zwischen benachbarten Wickelstellen gleichgroß sind.

Das erfindungsgemäße Verfahren wird nachfolgend anhand einiger Ausführungsbeispiele der erfindungsgemäßen Vorrichtung unter Bezug auf die beigefügten Figuren näher erläutert.

Es stellen dar:
- Fig. 1: schematisch eine Ansicht eines ersten Ausführungsbeispiels der erfindungsgemäßen Vorrichtung
- Fig. 2: schematisch eine Teilansicht eines weiteren Ausführungsbeispiels der erfindungsgemäßen Vorrichtung
- Fig. 3: schematisch eine Teilansicht eines weiteren Ausführungsbeispiels der erfindungsgemäßen Vorrichtung

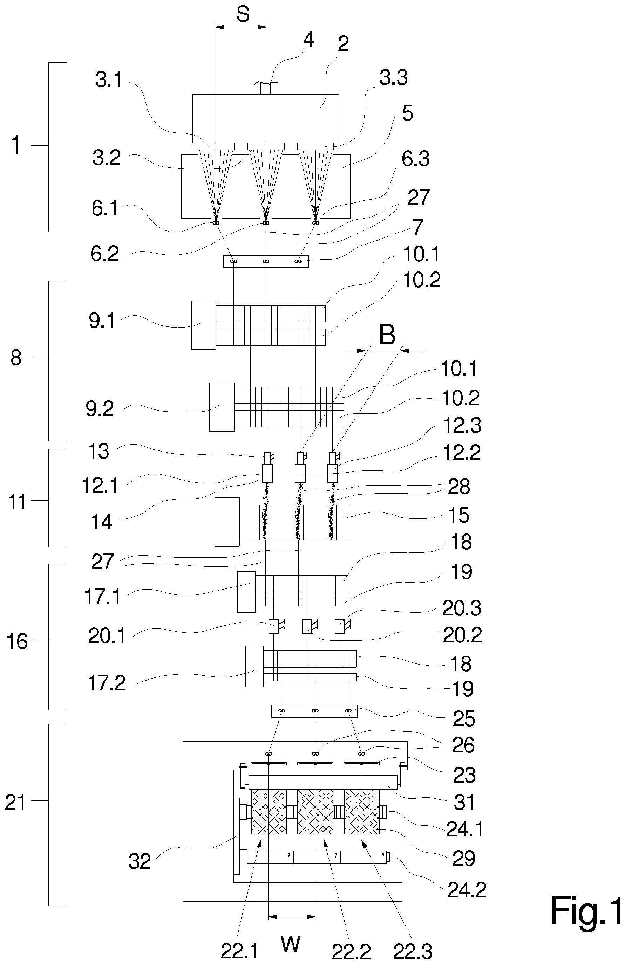

In der Fig. 1 ist ein erstes Ausführungsbeispiel der erfindungsgemäßen Vorrichtung zum Schmelzspinnen, Verstrecken, Kräuseln und Aufwickeln mehrerer Fäden schematisch dargestellt. Die Vorrichtung besteht aus einer Spinneinrichtung 1, einer Verstreckeinrichtung 8, einer Kräuseleinrichtung 11, einer Nachbehandlungseinrichtung 16 und einer Aufwickeleinrichtung 21, die zu einem Fadenlauf hintereinander angeordnet sind.

Die Spinneinrichtung 1 ist in diesem Ausführungsbeispiel durch einen Spinnbalken 2 mit drei an der Unterseite des Spinnbalkens 2 nebeneinander angeordneten Spinndüsen 3.1, 3.2 und 3.3 schematisch dargestellt. Der Spinnbalken 2 ist üblicherweise beheizt ausgeführt und weist ein Schmelzeverteilersystem sowie ein oder mehrere Spinnpumpen auf. Eine von einer Schmelzequelle zugeführte Schmelze wird über einen Zulauf 4 den Spinndüsen 3.1 bis 3.3 zugeführt.

Unmittelbar unterhalb des Spinnbalkens 2 ist eine Kühleinrichtung 5 vorgesehen, um die durch die Spinndüsen 3.1 bis 3.3 extrudierten Filamentstränge abzukühlen. Der Kühleinrichtung 5 sind im unteren Bereich mehrere Sammelfadenführer 6.1 bis 6.3 zugeordnet, um die pro Spinndüse 3.1 bis 3.3 erzeugten Filamentbündel jeweils zu einem Faden 27 zusammenzuführen.

Die Fäden 27 werden gemeinsam als eine Fadenschar aus der Spinneinrichtung 1 abgezogen. Hierzu weist die Verstreckeinrichtung 8 eine erste Galetteneinheit 9.1 auf. Die Galetteneinheit 9.1 ist durch zwei auskragend gehaltene Galetten 10.1 und 10.2 gebildet, die einseitig gelagert und mit jeweils einem Antrieb gekoppelt sind. Die Galetten 10.1 und 10.2 der Galetteneinheit 9.1 sind bevorzugt beheizt ausgeführt.

Der Galetteneinheit 9.1 ist eine zweite Galetteneinheit 9.2 zugeordnet, die ebenfalls aus zwei Galetten 10.1 und 10.2 gebildet ist. Die Galetten 10.1 und 10.2 der Galetteneinheit 9.2 sind mit einem Antrieb gekoppelt.

Die Galetteneinheiten 9.1 und 9.2 werden üblicherweise mit einer Differenzgeschwindigkeiten angetrieben, um die Fäden 27 als eine Fadenschar gemeinsam zu verstrecken.

Zur Führung der Fäden 27 an den Galetteneinheiten 9.1 und 9.2 ist zwischen der Verstreckeinrichtung 8 und der Spinneinrichtung 1 ein Fadenscharführer 7 vorgesehen, der zwischen den Fäden einen vorbestimmten Behandlungsabstand einstellt. Der Behandlungsabstand zwischen den Fäden 27 ist derart gewählt, dass die Fäden 27 vereinzelt mit mehreren Umschlingungen nebeneinander am Umfang der Galetteneinheiten 9.1 und 9.2 geführt werden.

Zur Vereinzelung der Fäden 27 werden diese beim Prozessbeginn nacheinander mit mehrfacher Umschlingung an die Galetteneinheiten 9.1 und 9.2 angelegt. Der Behandlungsabstand zwischen den Fäden wird somit maßgeblich durch die Anzahl der Umschlingungen der einzelnen Fäden an den Galetteneinheiten 9.1 und 9.2 bestimmt. Die Anzahl der Umschlingungen hängt im wesentlichen von der Fadenbehandlung insbesondere von der Temperierung des Fadens ab. So werden zum Verstrecken üblicherweise sechs bis zwölf Umschlingungen im Extremfall drei bis zwanzig Umschlingungen benötigt. Daraus resultiert ein Behandlungsabstand zwischen benachbarten Fäden im Bereich von 20 bis 200 mm.

Wie aus der Darstellung in Fig. 1 hervorgeht, bleibt der Behandlungsabstand zwischen den Fäden bis zur Aufwickeleinrichtung 21 unverändert. Insbesondere bei der Kräuseleinrichtung 11 lässt sich damit eine Teilung benachbarter Texturieraggregate einstellen, die einen geraden Fadenlauf zwischen der Verstreckeinrichtung 8 und der Kräuseleinrichtung 11 ermöglichen. So weist die Kräuseleinrichtung 11 mehrere Texturieraggregate 12.1 bis 12.3 auf, die mit dem Behandlungsabstand zueinander angeordnet sind. In Fig. 1 ist hierzu der Behandlungsabstand mit dem Kennbuchstaben B gekennzeichnet. Grundsätzlich ist es jedoch auch möglich, den Behandlungsabstand zwischen der Kräuseleinrichtung 11 und der Aufwickeleinrichtung 21 größer oder kleiner auszuführen.

Die Texturieraggregate 12.1 bis 12.3 werden in diesem Ausführungsbeispiel jeweils durch eine Förderdüse 13 und eine Stauchkammer 14 gebildet. Derartige Texturieraggregate sind hinlänglich bekannt, so dass an dieser Stelle keine weitere Erläuterung erfolgt.

Zur Aufnahme und Abkühlung der durch die Texturieraggregate 12.1 bis 12.3 gebildeten Fadenstopfen 28 ist eine Kühltrommel 15 vorgesehen, an deren Umfang die Fadenstopfen 28 parallel nebeneinander geführt sind. Die Fadenstopfen 28 können dabei mit einfacher oder mehrfacher Umschlingung am Umfang der Kühltrommel 15 geführt werden.

Der Kräuseleinrichtung 11 ist eine Nachbehandlungseinrichtung 16 zugeordnet, durch welche die Fadenstopfen 28 zu jeweils einem Faden 27 aufgelöst werden und durch welche eine Nachbehandlung insbesondere eine thermische Nachbehandlung unter geringer Zugspannung ausgeführt wird. Die Nachbehandlungseinrichtung 16 weist hierzu zwei Galetteneinheiten 17.1 und 17.2 auf, die jeweils durch eine Galette 18 und eine Umlenkrolle 19 gebildet sind. Die Galette 18 und die Umlenkrolle 19 sind auskragend angeordnet, wobei die Galette 18 mit einem Antrieb gekoppelt ist.

Zwischen den Galetteneinheiten 17.1 und 17.2 sind mehrere Verwirbelungsaggregate 20.1, 20.2 und 20.3 angeordnet. Die Verwirbelungsaggregate 20.1, 20.2 und 20.3 weisen ebenfalls zwischen sich den Behandlungsabstand B auf, so dass die Fäden bei einer vereinzelten Führung mit mehreren Umschlingungen an der Galetteneinheit 17.1 parallel in einem geraden Fadenlauf führbar sind. Nach der Verwirbelung werden die Fäden 27 von der Galetteneinheit 17.2 aufgenommen und ebenfalls vereinzelt mit mehreren Umschlingungen nebeneinander an der Galette 18 und der Umlenkrolle 19 geführt.

Am Ende des Prozesses werden die gekräuselten Fäden 27 zu Spulen 29 aufgewickelt. Hierzu weist die Aufwickeleinrichtung 21 zu jedem Faden eine Wickelstelle 22.1, 22.2 und 22.3 auf. Den Wickelstellen 22.1, 22.2 und 22.3 ist eine Spulspindel 24.1 zur Aufnahme der Spulen 29 sowie eine Changiereinheit 23 und eine Andrückwalze 31 zur Verlegung der Fäden 27 zugeordnet. Der Einlauf der Fäden 27 in den Wickelstellen 22.1 bis 22.3 erfolgt über sogenannte Kopffadenführer 26, die den Wickelstellen 22.1 bis 22.3 jeweils vorgeordnet sind. Die Spulspindel 24.1 ist an einem Spulrevolver 32 gehalten, der noch eine zweite Spulspindel 24.2 zum kontinuierlichen Wickeln der Fäden hält.

Wie aus der Darstellung in Fig. 1 hervorgeht, erfordert die Spulenbreite der gewickelten Spulen 29 eine Teilung der Wickelstellen 22.1 bis 22.3. Die Teilung zwischen den Wickelstellen 22.1 bis 22.3 ist hier als Wickelabstand bezeichnet und in Fig. 1 mit dem Kennbuchstaben W gekennzeichnet. Der Wickelabstand W zwischen den Wickelstellen 22.1 bis 22.3 ist größer als der Behandlungsabstand B in der vorgeordneten Nachbehandlungseinrichtung 16. Somit ist zwischen der Aufwickeleinrichtung 21 und der Nachbehandlungseinrichtung 16 ein Fadenverteilführer 25 vorgesehen, durch welcher eine Aufspreizung der Fäden 27 möglich ist.

Bei dem in Fig. 1 dargestellten Ausführungsbeispiel der erfindungsgemäßen Vorrichtung werden durch die Spinneinrichtung 1 mehrere Fäden parallel nebeneinander aus mehreren Spinndüsen 3.1 bis 3.3 gesponnen. Die Spinndüsen 3.1 bis 3.3 der Spinneinrichtung 1 sind jeweils mit einem Spinnabstand zueinander an dem Spinnbalken 2 gehalten. Der Spinnabstand ist in Fig. 1 mit dem Kennbuchstaben S gekennzeichnet. Der Spinnabstand S ist in diesem Ausführungsbeispiel größer als der Behandlungsabstand B in der Verstreckeinrichtung 8. Die Fäden 27 werden daher durch den Fadenscharführer 7 von dem Spinnabstand S in den Behandlungsabstand B zusammengerafft.

Das Verstrecken, Kräuseln und Nachbehandeln der Fäden 27 erfolgt mit einer vorteilhaften parallelen Fadenführung, so dass zwischen der Verstreckeinrichtung 8, der Kräuseleinrichtung 11 und der Nachbehandlungseinrichtung 16 keine Fadenauslenkungen oder Umlenkungen und somit keine zusätzlichen Fadenführungselemente erforderlich sind. Die Fäden 27 lassen sich unter gleichen Bedingungen verstrecken, kräuseln und nachbehandeln. Damit ist eine hohe Gleichmäßigkeit bei der Herstellung der gekräuselten Fäden möglich.

Die Anzahl der Fäden ist in dem Ausführungsbeispiel nach Fig. 1 mit drei Fäden beispielhaft. Grundsätzlich können zwei oder auch mehr Fäden gleichzeitig als eine Fadenschar nach dem erfindungsgemäßen Verfahren hergestellt werden. Wesentlich hierbei ist, dass die Fäden einzeln an die Galetteneinheiten der Verstreckeinrichtung 8 angelegt werden, wobei die Fäden weiterhin als eine Fadenschar behandelt und aufgewickelt werden. Der vergrößerte Behandlungsabstand zwischen den Fäden hat sich insbesondere auch bei der Führung der Fadenstopfen 28 an der Kühltrommel 15 bewährt. So lassen sich vorteilhaft Kontaktierungen zwischen den Fadenstopfen auch bei mehrfacher Umschlingung völlig vermeiden. Wie aus der Darstellung in Fig. 1 hervorgeht, sind die Fadenführungen in dem gesamten Prozess im wesentlichen durch den Spinnabstand S benachbarter Spinndüsen, dem Behandlungsabstand B benachbarter Texturieraggregate und dem Wickelabstand W benachbarter Wickelstellen bestimmt. Üblicherweise sind der Spinnabstand S in der Spinneinrichtung 1 der Behandlungsabstand B in der Verstreckeinrichtung 8 und der Wickelabstand W in der Aufwickeleinrichtung 21 abhängig von den Aggregaten und in der Regel unterschiedlich groß ausgeführt. Durch das erfindungsgemäße Verfahren und die erfindungsgemäße Vorrichtung besteht jedoch nun die Möglichkeit, eine parallele Fadenführung auch zwischen einer Spinneinrichtung und einer Verstreckeinrichtung zu realisieren, ohne die Vorteile einer Fadenscharführung aufgeben zu müssen.

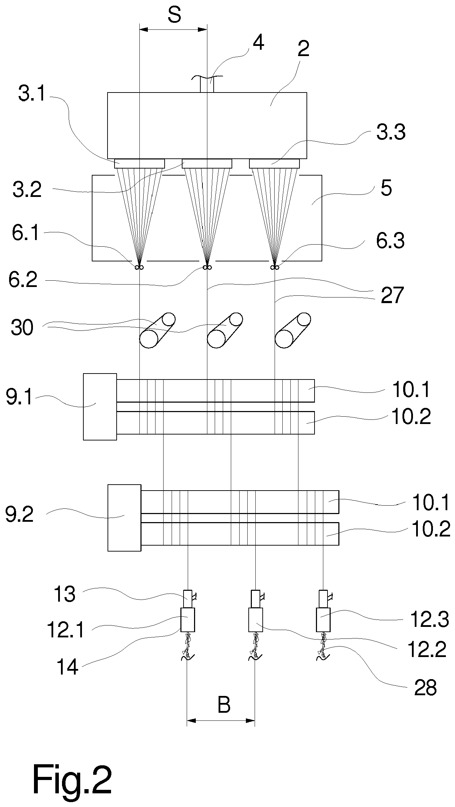

In Fig. 2 ist ein Ausführungsbeispiel der erfindungsgemäßen Vorrichtung in einer Teilansicht dargestellt, bei welcher die Fadenführung vom Spinnen bis zum Verstrecken ohne ein Zusammenraffen oder Aufspreizen erfolgt. Das Ausführungsbeispiel nach Fig. 2 ist von den Vorrichtungsteilen im wesentlichen identisch zu dem vorgenannten Ausführungsbeispiel, so dass zu dem vorgenannten Ausführungsbeispiel Bezug genommen wird und an dieser Stelle nur die Unterschiede erläutert werden.

Bei dem in Fig. 2 dargestellten Ausführungsbeispiel sind zwischen der Spinneinrichtung 1 und der Verstreckeinrichtung 8 mehrere Einzelgaletteneinheiten 30 vorgesehen, durch welche die Fäden 27 jeweils parallel nebeneinander aus der Spinneinrichtung 1 abgezogen werden. Die Einzelgaletteneinheiten 30 weisen hierzu zwischen sich ein Spinnabstand S auf, so dass die Fäden 27 parallel nebeneinander von den Spinndüsen 3.1 bis 3.3 abgezogen werden.

Die Fäden 27 werden vereinzelt und mit mehreren Umschlingungen nebeneinander am Umfang der Galetteneinheiten 9.1 und 9.2 geführt und verstreckt. Anschließend werden die Fäden ebenfalls im parallelen Fadenlauf nebeneinander in die nachgeordnete Kräuseleinrichtung 11 geführt. In diesem Fall ist der Behandlungsabstand B zwischen den benachbarten Texturieraggregaten 12.1, 12.2 und 12.3 gleich dem Spinnabstand S.

Bei dem in Fig. 2 dargestellten Ausführungsbeispiel ist es auch möglich, die Fäden ohne Zwischenschaltung mehrerer Einzelgaletteneinheiten direkt mit der Galetteneinheit 9.1 abzuziehen. Je nach Spinnabstand könnten die Einzelgaletteneinheiten auch in Fadenlaufrichtung versetzt zueinander angeordnet sein. In allen Fällen wäre der Spinnabstand gleich dem Behandlungsabstand.

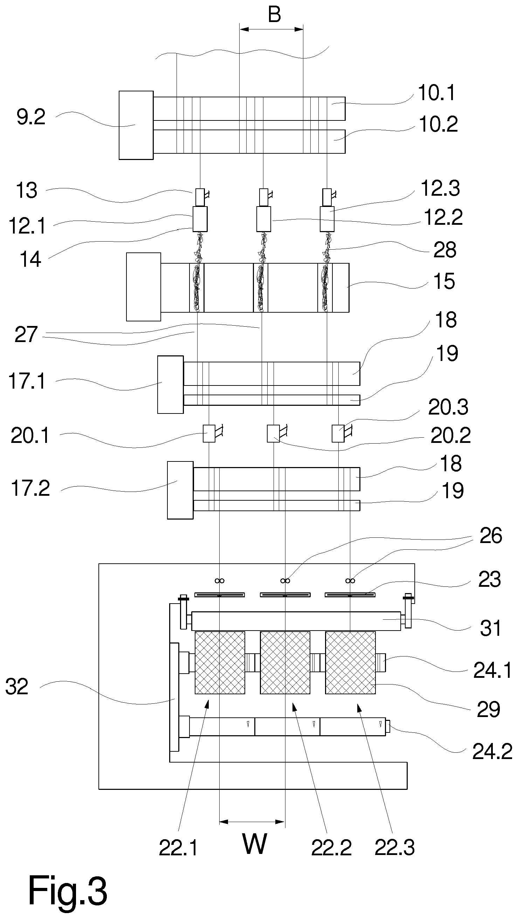

Grundsätzlich besteht jedoch auch die Möglichkeit, den Behandlungsabstand B zum Verstrecken, Kräuseln und Nachbehandeln auf einen Wickelabstand W der Aufwickeleinrichtung 21 anzugleichen. Hierzu ist in Fig. 3 ein Ausführungsbeispiel der erfindungsgemäßen Vorrichtung gezeigt, bei welcher die Fäden ohne Aufspreizung von einer Nachbehandlungseinrichtung 16 zu den Wickelstellen 22.1 bis 22.3 der Aufwickeleinrichtung 21 geführt werden. Damit sind keine zusätzlichen Fadenführungselemente zwischen der Nachbehandlungseinrichtung 16 und der Aufwickeleinrichtung 21 erforderlich.

Das in Fig. 3 dargestellte Ausführungsbeispiel ist im Aufbau und Funktion der Vorrichtungsteile identisch zu dem ersten Ausführungsbeispiel, so dass an dieser Stelle zu der vorgenannten Beschreibung Bezug genommen wird.

Das erfindungsgemäße Verfahren und die erfindungsgemäße Vorrichtung zum Schmelzspinnen, Verstrecken, Kräuseln und Aufwickeln mehrerer Fäden ist somit besonders vorteilhaft, um eine für den Herstellungsprozess günstige Fadenführung zu erhalten. Die Fadenteilung kann dabei durch die Spinndüsenteilung, die Umschlingungsanzahl der Fäden an den Galetten, die Teilung der Texturieraggregate oder die Teilung der Wickelstellen bestimmt sein. Für den Herstellungsprozess von sogenannten BCF-Garnen ist die primäre Größe vorzugsweise die sogenannte Belegungslänge am Umfang der Galetten der Galetteneinheiten zur Aufheizung des Fadens. Die Fadenteilung zwischen den Fäden wird dabei so gewählt, dass bei einem ausreichenden Abstand der Umschlingungen eines Fadens eine genügende hohe Umschlingungsanzahl vorliegt. Die Umschlingungsanzahl bestimmt dabei die Verweilzeit des Fadens an der Oberfläche der Galette. Daraus ergibt sich ein benötigter Arbeitsbereich pro Faden am Umfang der Galetten und somit ein Behandlungsabstand zwischen den unterschiedlichen Fäden.

Die in den Ausführungsbeispielen nach Fig. 1 und Fig. 2 gezeigten Vorrichtungsteile sind beispielhaft. So könnte die Verstreckeinrichtung auch aus einer Kombination von Einzelgaletteneinheiten und einer Galetteneinheit gebildet sein. Ebenso sind die Texturieraggregate beispielhaft. Neben dem Stauchkammerprinzip könnten auch andere Kräuselprinzipien angewendet werden.

## Patentansprüche

1. Verfahren zum Schmelzspinnen, Verstrecken, Kräuseln und Aufwickeln mehrerer Fäden, bei welchem die Fäden aus mehrere Spinndüsen nebeneinander gesponnen, als eine Fadenschar an zumindest einer Galetteneinheit gemeinsam geführt, verstreckt und anschließend zum Kräuseln nebeneinander mehreren Texturieraggregaten zugeführt werden,
**dadurch gekennzeichnet, dass** die Fäden an der Galetteneinheit vereinzelt mit mehreren Umschlingungen nebeneinander geführt werden und bei welchem die Fäden nach Ablauf von der Galetteneinheit in einem geraden Fadenlauf parallel nebeneinander in die Texturieraggregate geführt werden.

2. Verfahren nach Anspruch 1, **dadurch gekennzeichnet, dass** die Fäden zum Kräuseln jeweils zu einem Fadenstopfen gestaucht werden und dass die Fadenstopfen parallel nebeneinander geführt und zu gekräuselten Fäden aufgelöst werden.

3. Verfahren nach Anspruch 2, **dadurch gekennzeichnet, dass** die Fäden nach dem Kräuseln parallel nebeneinander durch eine Galetteneinheit abgezogen werden, wobei die Fäden vereinzelt mit mehreren Umschlingungen nebeneinander an der Galetteneinheit geführt werden.

4. Verfahren nach einem der Ansprüche 1 bis 3, **dadurch gekennzeichnet, dass** die Fäden nach dem Ausspinnen parallel nebeneinander mit einem Spinnabstand zueinander verstreckt und gekräuselt werden.

5. Verfahren nach einem der Ansprüche 1 bis 3, **dadurch gekennzeichnet, dass** die Fäden vor dem Aufwickeln zu mehreren Spulen parallel nebeneinander mit einem durch die Spulen bedingten Wickelabstand zueinander verstreckt und gekräuselt werden.

6. Verfahren nach einem der Ansprüche 1 bis 3, **dadurch gekennzeichnet, dass** die Fäden nach dem Spinnen bis zum Aufwickeln zu Spulen mit einem Abstand zueinander parallel geführt werden.

7. Vorrichtung zum Schmelzspinnen, Verstrecken, Kräuseln und Aufwickeln mehrerer Fäden, bestehend aus einer Spinnvorrichtung (1) mit mehreren Spinndüsen (3.1, 3.2, 3.3), einer Verstreckeinrichtung (8) mit zumindest einer Galetteneinheit (10.2), einer Kräuseleinrichtung (11) mit mehreren Texturieraggregaten (12.1, 12.2, 12.3) und einer Aufwickeleinrichtung (21) mit mehreren Wickelstellen (22.1, 22.2, 22.3), **dadurch gekennzeichnet, dass** benachbarte Texturieraggregate (12.1, 12.2) der Kräuseleinrichtung (11) einen derartigen Behandlungsabstand (B) zwischen sich bilden, dass die Fäden bei einer vereinzelten Führung mit mehreren Umschlingungen an der Galetteneinheit (10.2) der Verstreckeinrichtung (8) parallel in einem geraden Fadenlauf führbar sind.

8. Vorrichtung nach Anspruch 7, **dadurch gekennzeichnet, dass** der Behandlungsabstand (B) zwischen den Texturieraggregaten (12.1, 12.2) durch eine Anzahl der Umschlingungen eines der Fäden (27) an der Galetteneinheit (10.2) bestimmt ist.

9. Vorrichtung nach einem der Ansprüche 7 oder 8, **dadurch gekennzeichnet, dass** der Kräuseleinrichtung (11) eine Nachbehandlungseinrichtung (16) mit mehreren Verwirbelungsaggregaten (20.1, 20.2) aufweist, wobei benachbarte Verwirbelungsaggregate (20.1, 20.2) mit dem Behandlungsabstand (13) zueinander gehalten sind.

10. Vorrichtung nach einem der Ansprüche 7 bis 9, **dadurch gekennzeichnet, dass** benachbarte Spinndüsen (3.1, 3.3) der Spinneinrichtung (1) einen Spinnabstand (S) zwischen sich bilden und dass der Spinnabstand (S) zwischen den Spinndüsen (3.1, 3.2) gleich dem Behandlungsabstand (B) zwischen den Texturieraggregaten (12.1, 12.2) ist.

11. Vorrichtung nach einem der Ansprüche 7 bis 9, **dadurch gekennzeichnet, dass** benachbarte Wickelstellen (22.1, 22.2) der Aufwickeleinrichtung (21) einen Wickelabstand (W) zwischen sich bilden und dass der Wickelabstand (W) zwischen den Wickelstellen (22.1, 22.2) gleich dem Behandlungsabstand (B) zwischen den Texturieraggregaten (12.1, 12.2) ist.

12. Vorrichtung nach Anspruch 10 oder 11, **dadurch gekennzeichnet, dass** der Spinnabstand (S) zwischen benachbarten Spinndüsen (3., 3.2) und der Wickelabstand (W) zwischen benachbarten Wickelstellen (22.1, 22.2) gleich groß sind.

## Claims

1. A method for melt-spinning, drawing, crimping, and winding a plurality of threads, in which method the threads from a plurality of spinning nozzles are spun beside one another, on at least one godet unit are collectively guided as a thread skein, are drawn, and for crimping are subsequently guided beside one another to a plurality of texturing apparatuses, **characterized in that** the threads in a singularized manner and having a plurality of wrappings are guided beside one another on the godet unit, and in which method the threads after running off from the godet unit are guided into the texturing apparatuses in a straight thread run so as to be in parallel beside one another.

2. The method as claimed in claim 1, **characterized in that** for crimping the threads are each compressed to form one thread plug, and **in that** the thread plugs are guided in parallel beside one another, and are dissolved to form crimped threads.

3. The method as claimed in claim 2, **characterized in that** the threads after crimping are drawn off in parallel beside one another by a godet unit, wherein the threads in a singularized manner and having a plurality of wrappings are guided beside one another on the godet unit.

4. The method as claimed in one of claims 1 to 3, **characterized in that** the threads after being spun are drawn and crimped so as to be in parallel beside one another at a mutual spinning spacing.

5. The method as claimed in one of claims 1 to 3, **characterized in that** the threads before being wound to form a plurality of packages are drawn and crimped so as to be in parallel beside one another, at a mutual winding spacing which is contingent on the packages.

6. The method as claimed in one of claims 1 to 3, **characterized in that** the threads after being spun and before being wound to form packages are guided so as to be mutually parallel at one spacing.

7. A device for melt-spinning, drawing, crimping, and winding a plurality of threads, the device being composed of a spinning device (1) having a plurality of spinning nozzles (3.1, 3.2, 3.3), a drawing installation (8) having at least one godet unit (10.2), a crimping installation (11) having a plurality of texturing apparatuses (12.1. 12.2, 12.3), and a winding installation (21) having a plurality of winding positions (22.1, 22.2, 22.3), **characterized in that** adjacent texturing apparatuses (12.1, 12.2) of the crimping installation (11) therebetween form a treatment spacing (B) in such a manner that the threads in the case of singularized guiding are capable of being guided in parallel and in a straight thread run, having a plurality of wrappings on the godet unit (10.2) of the drawing installation (8).

8. The device as claimed in claim 7, **characterized in that** the treatment spacing (B) between the texturing apparatuses (12.1, 12.2) is determined by a number of wrappings of one of the threads (27) on the godet unit (10.2).

9. The device as claimed in one of claims 7 or 8, **characterized in that** the crimping installation (11) has a post-treatment installation (16) having a plurality of entanglement apparatuses (20.1, 20.2), wherein adjacent entanglement apparatuses (20.1, 20.2) are held at the mutual treatment spacing (13).

10. The device as claimed in one of claims 7 to 9, **characterized in that** adjacent spinning nozzles (3.1, 3.3) of the spinning installation (1) therebetween form a spinning spacing (S), and **in that** the spinning spacing (S) between the spinning nozzles (3.1, 3.2) is equal to the treatment spacing (B) between the texturing apparatuses (12.1, 12.2).

11. The device as claimed in one of claims 7 to 9, **characterized in that** adjacent winding positions (22.1, 22.2) of the winding installation (21) therebetween form a winding spacing (W), and **in that** the winding spacing (W) between the winding positions (22.1, 22.2) is equal to the treatment spacing (B) between the texturing apparatuses (12.1, 12.2).

12. The device as claimed in claim 10 or 11, **characterized in that** the spinning spacing (S) between adjacent spinning nozzles (3., 3.2), and the winding spacing (W) between adjacent winding positions (22.1, 22.2) are of identical size.

## Revendications

1. Procédé de filage à chaud, d'étirage, de sertissage et d'enroulement de plusieurs fils, dans lequel les fils provenant de plusieurs buses de filage sont filés l'un à côté de l'autre, conduits ensemble sous la forme d'une nappe de fils à au moins une unité de galette, étirés et ensuite fournis l'un à côté de l'autre à plusieurs groupes de texturation pour le sertissage,
**caractérisé en ce que** l'on guide les fils l'un à côté de l'autre individuellement sur l'unité de galette avec plusieurs spires et dans lequel on guide les fils après la sortie de l'unité de galette dans un trajet de fils rectiligne parallèlement l'un à côté de l'autre dans les groupes de texturation.

2. Procédé selon la revendication 1, **caractérisé en ce que** les fils sont foulés pour le sertissage chaque fois en un bouchon de fils et **en ce que** les bouchons de fils sont guidés parallèlement l'un à côté de l'autre et sont démêlés en fils sertis.

3. Procédé selon la revendication 2, **caractérisé en ce que** les fils sont tirés après le sertissage parallèlement l'un à côté de l'autre à travers une unité de galette, dans lequel les fils sont guidés individuellement avec plusieurs spires l'un à côté de l'autre sur l'unité de galette.

4. Procédé selon l'une quelconque des revendications 1 à 3, **caractérisé en ce que** les fils sont étirés et sertis après le filage parallèlement l'un à côté de l'autre avec une distance de filage l'un par rapport à l'autre.

5. Procédé selon l'une quelconque des revendications 1 à 3, **caractérisé en ce que** les fils sont étirés et sertis, avant l'enroulement en plusieurs bobines, parallèlement l'un à l'autre avec une distance d'enroulement l'un par rapport à l'autre imposée par les bobines.

6. Procédé selon l'une quelconque des revendications 1 à 3, **caractérisé en ce que** les fils sont guidés parallèlement, après le filage et jusqu'à l'enroulement en bobines, avec une distance l'un par rapport à l'autre.

7. Dispositif de filage à chaud, d'étirage, de sertissage et d'enroulement de plusieurs fils, se composant d'un dispositif de filage (1) avec plusieurs buses de filage (3.1, 3.2, 3.3), d'un dispositif d'étirage (8) avec au moins une unité de galette (10.2), d'un dispositif de sertissage (11) avec plusieurs groupes de texturation (12.1, 12.2, 12.3) et d'un dispositif d'enroulement (21) avec plusieurs postes d'enroulement (22.1, 22.2, 22.3), **caractérisé en ce que** des groupes de texturation voisins (12.1, 12.2) du dispositif de sertissage (11) forment entre eux une distance de traitement (B) telle que les fils puissent, lors d'un guidage individuel, être guidés parallèlement dans un trajet de fils rectiligne avec plusieurs spires sur l'unité de galette (10.2) du dispositif d'étirage (8).

8. Dispositif selon la revendication 7, **caractérisé en ce que** la distance de traitement (B) entre les groupes de texturation (12.1, 12.2) est déterminée par un nombre des spires d'un des fils (27) sur l'unité de galette (10.2).

9. Dispositif selon une des revendications 7 ou 8, **caractérisé en ce que** le dispositif de sertissage (11) présente un dispositif de post-traitement (16) avec plusieurs groupes de tourbillonnement (20.1, 20.2), dans lequel des groupes de tourbillonnement voisins (20.1, 20.2) sont maintenus avec la distance de traitement (13) l'un par rapport à l'autre.

10. Dispositif selon l'une quelconque des revendications 7 à 9, **caractérisé en ce que** des buses de filage voisines (3.1, 3.3) du dispositif de filage (1) forment entre elles une distance de filage (S) et **en ce que** la distance de filage (S) entre les buses de filage (3.1, 3.2) est égale à la distance de traitement (B) entre les groupes de texturation (12.1, 12.2).

11. Dispositif selon l'une quelconque des revendications 7 à 9, **caractérisé en ce que** des postes d'enroulement voisins (22.1, 22.2) du dispositif d'enroulement (21) forment entre eux une distance d'enroulement (W) et **en ce que** la distance d'enroulement (W) entre les postes d'enroulement (22.1, 22.2) est égale à la distance de traitement (B) entre les groupes de texturation (12.1, 12.2).

12. Dispositif selon une revendication 10 ou 11, **caractérisé en ce que** la distance de filage (S) entre des buses de filage voisines (3., 3.2) et la distance d'enroulement (W) entre des postes d'enroulement voisins (22.1, 22.2) sont égales.
